(19) Europäisches Patentamt
European Patent Office
Office européen des brevets

(11) **EP 4 451 410 A1**

(12) **EUROPEAN PATENT APPLICATION**
published in accordance with Art. 153(4) EPC

(43) Date of publication:
**23.10.2024 Bulletin 2024/43**

(21) Application number: **23865888.4**

(22) Date of filing: **15.09.2023**

(51) International Patent Classification (IPC):
**H01M 10/0587** (2010.01)     **H01M 4/133** (2010.01)
**H01M 10/052** (2010.01)      **H01M 4/525** (2010.01)
**H01M 4/505** (2010.01)       **H01M 4/587** (2010.01)
**H01M 10/0525** (2010.01)     **H01M 4/02** (2006.01)

(52) Cooperative Patent Classification (CPC):
**H01M 4/02; H01M 4/133; H01M 4/505;
H01M 4/525; H01M 4/587; H01M 10/052;
H01M 10/0525; H01M 10/0587;** Y02E 60/10;
Y02P 70/50

(86) International application number:
**PCT/KR2023/013877**

(87) International publication number:
**WO 2024/058592 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022  KR 20220116882
10.08.2023  KR 20230104698**

(71) Applicant: **LG Energy Solution, Ltd.
Seoul 07335 (KR)**

(72) Inventors:
• **LEE, Taek Soo
  Daejeon 34122 (KR)**
• **CHO, Jin Ho
  Daejeon 34122 (KR)**
• **YOON, Jong Su
  Daejeon 34122 (KR)**
• **JEON, Shin Wook
  Daejeon 34122 (KR)**
• **KIM, Young Gon
  Daejeon 34122 (KR)**

(74) Representative: **Plasseraud IP
104 Rue de Richelieu
CS92104
75080 Paris Cedex 02 (FR)**

(54) **WINDING-TYPE ELECTRODE ASSEMBLY, AND LITHIUM SECONDARY BATTERY COMPRISING SAME**

(57)     Disclosed herein relates to a winding-type electrode assembly and a lithium secondary battery including the same, wherein the winding-type electrode assembly can achieve a uniform charging performance of the electrode assembly by controlling the alignment of carbon-based negative electrode active materials contained in the negative electrode active layer according to the degree of spacing of the negative electrode active layers provided on both sides of the negative electrode current collector relative to the winding center of the electrode assembly, as well as improve the performance deterioration of the negative electrode current collector caused by wrinkling, loosening, buckling, etc. during charge and discharge for a long period of time, so the secondary battery comprising the same has the advantage of excellent charge and discharge performance for a long period of time.

[FIG. 1]

**Description**

[Technical Field]

This application claims the benefit of priority based on Korean Patent Application No. 10-2022-0116882, filed on September 16, 2022, and Korean Patent Application No. 10-2023-0104698, filed on August 10, 2023, and the entire contents of the Korean patent application are incorporated herein by reference.

The present invention relates to a winding-type electrode assembly and a lithium secondary battery including the same.

[Background Art]

Recently, secondary batteries have been widely applied in small devices such as portable electronics, as well as in medium and large devices such as battery packs or power storage in hybrid vehicles or electric vehicles.

In a lithium secondary battery, charging and discharging is accomplished by the transfer of lithium ions between the positive electrode and negative electrode. These lithium secondary batteries can be manufactured in a variety of forms. One example is a structure having an electrode body in which a sheet-type electrode is wound (i.e., a winding-type electrode assembly).

Specifically, a winding-type electrode assembly is formed by, for example, a negative electrode sheet having a negative electrode active material layer supported on both sides of a negative electrode current collector and a positive electrode sheet having a positive electrode active material layer supported on both sides of a positive electrode current collector being wound in a swirling fashion through a separator sheet.

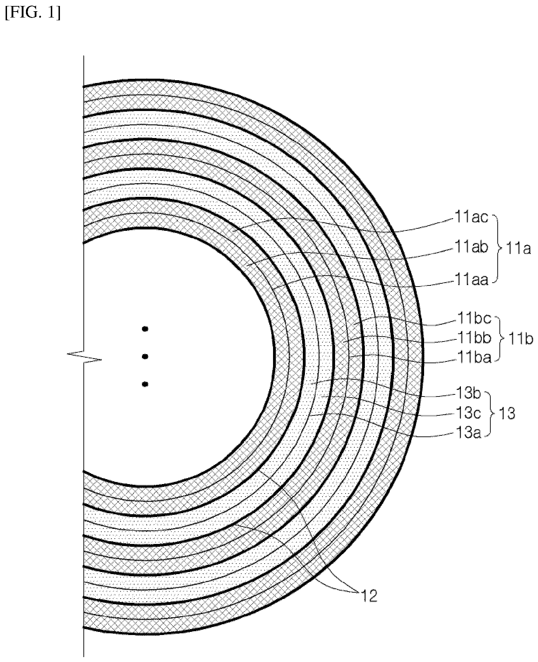

Here, the negative electrode 13 of the winding-type electrode body may be provided with negative electrode active layers 13b and 13c on both sides of the negative electrode current collector 13a as shown in FIG. 1. At this time, the second negative electrode active layer 13b located inwardly relative to the winding center of the electrode body has a larger area ratio than the adjacent first positive electrode active layer 11ac, and the first negative electrode active layer 13c located outwardly relative to the winding center of the electrode body has a smaller area ratio than the adjacent second positive electrode active layer 11bb. As a result, the first negative electrode active layer 13c has a migration rate ($2^{nd}$ kinetics) of lithium ions from the second positive electrode active layer 1 1bb greater than a migration rate ($1^{st}$ kinetics) of lithium ions from the first positive electrode active layer 11ac to the second negative electrode active layer 13b, which results in a shorter charging end time compared to the first negative electrode active layer 13c.

In other words, even if a negative electrode active layer is provided on a single negative electrode, the area ratio of the negative electrode active layer to the adjacent positive electrode active layer differs depending on its location, causing a deviation in the rate of migration of lithium ions between the negative electrode active layer and the positive electrode active layer. This deviation in the migration rate of lithium ions is responsible for the low charging performance of the negative electrode active layer located on the outer side relative to the negative electrode current collector.

Meanwhile, graphite materials such as natural graphite are used as negative electrode active materials. This graphite has a layered structure and is formed by laminating many layers of carbon atoms that are spread out in a planar shape to form a network structure. At the edge surface of these graphite layers (where the layers are overlapped), lithium ions intrude and diffuse between the layers when the secondary battery is charged. Also, at the edge surface of the graphite layer, the lithium ions can be intercalated and released during discharge. Furthermore, since the graphite layer has a lower electrical resistivity in the face direction than in the stacking direction of the graphite layer, a conduction path for diverted electrons is formed along the face direction of the layer.

In this regard, a technique for magnetically orienting graphite contained in a negative electrode to improve the charging performance of a winding-type electrode assembly in a lithium secondary battery using graphite has been proposed in the prior art. Specifically, a magnetic field is applied during the formation of the active layer of the negative electrode to orient the (0,0,2) crystal faces of the graphite to have a nearly horizontal slope with respect to the negative electrode current collector and to fix them. In this case, the edge surface of the graphite layer faces the positive electrode active layer, which facilitates the intercalation and deintercalation of lithium ions while shortening the conduction path of electrons. Accordingly, the electronic conductivity of the negative electrode is improved, thereby improving the charging performance of the secondary battery including the same.

However, the winding-type electrode body with graphite oriented by the magnetic field causes wrinkling, loosening, and buckling of the negative electrode current collector as the charge and discharge are repeated for a long time. This shape deformation of the negative electrode current collector not only reduces the durability of the negative electrode itself, but also induces performance degradation of the negative electrode active layer placed on the negative electrode current collector.

[Disclosure]

[Technical Problem]

The object of the present invention is to provide a winding-type electrode assembly and a lithium secondary battery comprising the same, which not only has excellent charging performance by inducing an orientation of graphite contained in the negative electrode, but also has improved performance deterioration due to shape deformation of the negative electrode current collector, such as wrinkling, loosening, and buckling of the negative electrode current collector when performing charge and discharge for a long time.

[Technical Solution]

To address the problems described above,
**[0013]** In an exemplary embodiment, the present invention provides

a winding-type electrode assembly including a positive electrode, a negative electrode, and a separator disposed therebetween, wherein
the negative electrode includes: a negative electrode current collector; and a first negative electrode active layer and a second negative electrode active layer comprising a carbon-based negative electrode active material and formed on both sides of the negative electrode current collector, respectively, wherein the first negative electrode active layer is spaced further from the winding center of the electrode assembly than the second negative electrode active layer, wherein
in the first negative electrode active layer, the alignment ($S_{ex60/0}$) of the carbon-based negative electrode active material represented by Equation 1 below is smaller than the alignment ($S_{in60/0}$) of the carbon-based negative electrode active material contained in the second negative electrode active layer:

$$[\text{Equation 1}]$$

$$S_{60/0} = \frac{I60_{B/A}}{I0_{B/A}}$$

$$[\text{Equation 2}]$$

$$I60_{B/A} = \frac{I60_B}{I60_A}$$

$$[\text{Equation 3}]$$

$$I0_{B/A} = \frac{I0_B}{I0_A}$$

In Equation 1 to Equation 3,

$S_{60/0}$ represents the value of the ratio of the ratio of the peak intensity ($I60_{B/A}$) at an incident angle of 60° of the X-ray to the ratio of the peak intensity ($I0_{B/A}$) at an incident angle of 0° of the X-ray,
$I60_A$ represents the intensity of the highest peak present at 286±1.0 eV, at an incidence angle of 60°,
$I60_B$ represents the intensity of the intensity of the highest peak present at 292.5±1.0 eV at an incidence angle of 60°,
$I0_A$ represents the intensity of the highest peak at 286±1.0 eV at an incidence angle of 0°,
$I0_B$ represents the intensity of the highest peak among the peaks present at 292.5±1.0 eV at an incidence angle of 0°.

Here, the first negative electrode active layer may have an alignment ($O.I_{1st}$) according to Formula 4 below that is smaller than the alignment ($O.I_{2nd}$) of the second negative electrode active layer:

[Equation 4]

$$O.I = I_{004}/I_{110}$$

In Equation 4,

$I_{004}$ represents the area of the peak representing the [0,0,4] crystal face in the X-ray diffraction spectroscopy (XRD) measurement of the negative active layer,

$I_{110}$ represents the area of the peak representing the [1,1,0] crystal face in an X-ray diffraction (XRD) measurement of the negative active layer.

Specifically, the alignment ($O.I_{1st}$) of the first negative electrode active layer is between 0.1 and 2.0, and the alignment ($O.I_{2nd}$) of the second negative electrode active layer may have a ratio of 101% to 150% based on the alignment ($O.I_{2nd}$) of the first negative electrode active layer.

In addition, the first negative electrode active layer may have an alignment ($O.I_{1st}$) at the outermost part of the electrode assembly that has a ratio of 101% to 150% based on the alignment ($O.I_{1st}$) at the winding center of the electrode assembly.

Moreover, the first negative electrode active layer may have a ratio ($I_{004}/I_{002}$) of the intensity of the peak representing the (0,0,4) crystal face to the intensity of the peak representing the (0,0,2) crystal face of 0.04 or more when measured by XRD using CuK$\alpha$ rays.

In addition, the first negative electrode active layer and the second negative electrode active layer may each have a loading amount of 250 mg/25 cm$^2$ to 500 mg/25 cm$^2$. Meanwhile, a carbon-based negative electrode active material may include one or more of the following: natural graphite and synthetic graphite, and may have a sphericity greater than or equal to 0.75.

In addition, a positive electrode may include a positive electrode active layer provided on both sides of the positive electrode current collector and including at least one positive electrode active material selected from the lithium metal oxides represented by Formula 1 and Formula 2 below:

[Formula 1]     $Li_x[Ni_yCo_zMn_wM^1_v]O_2$

[Formula 2]     $LiM^2_pMn_{1-p}O_4$

In Equation 1 and Equation 2,

$M^1$ is one or more of the following elements: W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and $y+z+w+v=1$,

$M^2$ is Ni, Co, or Fe, and

p is $0.05 \leq p \leq 1.0$.

In one example, the positive electrode active material may include one or more of the following: $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O2$, $LiNi_{0.7}Mn_{1.3}O_4$, $LiNi_{0.5}Mn_{1.5}O_4$, and $LiNi_{0.3}Mn_{1.7}O_4$.

Furthermore, in an exemplary embodiment, the present invention provides

a lithium secondary battery comprising a winding-type electrode assembly according to the above-described present invention.

[Advantageous Effects]

The winding-type electrode assembly according to the present invention can realize uniform charging performance of the electrode assembly by controlling the alignment of the carbon-based negative electrode active materials contained in the negative electrode active layer according to the degree of spacing of the negative electrode active layers arranged on both sides of the negative electrode current collector relative to the winding center of the electrode assembly. Furthermore, the electrode assembly can improve the performance deterioration caused by wrinkling, loosening, buckling, and the like of the negative electrode current collector during a charge and discharge for a long time, so that a secondary battery including the electrode assembly has the advantage of excellent long-period charge and discharge performance and life characteristics.

[Brief Description of the Drawings]

FIGS. 1 and 2 are cross-sectional views illustrating the structure of a winding-type electrode assembly according to the present invention.

FIG. 3 is an image of the alignment of the ab-axis crystal faces of graphite according to whether a magnetic field is applied to the negative electrode slurry during the formation of the negative electrode active layer, where (a) is a case where the crystal faces of graphite are not aligned because no magnetic field is applied, and (b) is a case where the crystal faces of graphite are aligned because a magnetic field is applied.

FIG. 4 is an image showing the trend of absorption peaks by type and position of each orbital according to an X-ray incident angle in near-end X-ray absorption fine structure (NEXAFS) spectroscopy, where (a) shows the type and position of orbits forming double bonds in graphite, and (b) shows the peak shape by position of each orbital at X-ray incident.

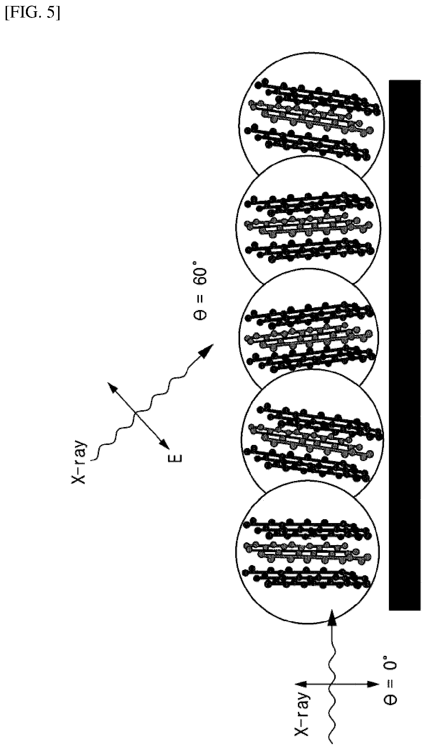

FIG. 5 is an image of an X-ray incident angle during near-end X-ray absorption fine structure (NEXAFS) spectroscopy analysis on a negative electrode manufactured in an exemplary embodiment according to the present invention.

[Detailed Description of the Preferred Embodiments]

The present invention is subject to various modifications and can have many different embodiments, and specific embodiments will be described in detail in the following description.

However, this is not intended to limit the present invention to any particular embodiment and should be understood to include all modifications, equivalents, or substitutions that are within the scope of the idea and technology of the present invention.

Throughout this specification, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.

Further, when a portion such as a layer, a film, an area, a plate, or the like is referred to as being "on" another portion, this includes not only the case in which the portion is "directly on" another portion but also the case in which still another portion is interposed therebetween. In contrast, when a portion such as a layer, a film, an area, a plate, or the like is referred to as being "below" another portion, this includes not only the case in which the portion is "directly below" another portion but also the case in which still another portion is interposed therebetween. In addition, to be disposed "on" in the specification of the present invention may include the case disposed at the lower portion as well as the upper portion.

Further, in the present invention, "comprising as a major component" may mean comprising 50 wt% or more (or 50 wt% or more by volume), 60 wt% or more (or 60 wt% or more by volume), 70 wt% or more (or 70 wt% or more by volume), 80 wt% or more (or 80 wt% or more by volume), 90 wt% or more (or 90 wt% or more by volume), or 95 wt% or more (or 95 wt% or more by volume) of the defined component relative to the total weight (or total volume). For example, "comprising graphite as the primary component of the negative electrode active material" may mean comprising at least 50 wt%, at least 60 wt%, at least 70 wt%, at least 80 wt%, at least 90 wt%, or at least 95 wt% graphite based on the total weight of the negative electrode active material, and in some cases may mean that the entire negative electrode active material is composed of graphite and comprises 100% graphite.

Furthermore, in the present invention, "cross-sectional structure" means a structure having a cut surface perpendicular to the winding direction of the wound electrode assembly. In this case, the cut surface may be the same as a surface cut parallel to the process direction in negative electrode manufacturing; or a surface cut in the longitudinal direction of the negative electrode slurry applied to form the negative electrode active layer. Further, the cross-sectional structure may include a surface cut in the thickness direction of the wound negative electrode active layer to include the winding center and the outermost part of the negative electrode active layer.

Also, as used herein, "carbon-based negative electrode active material is oriented" or "carbon-based negative electrode active material is aligned" means that certain crystal faces representing the two-dimensional planar structure of the carbon-based negative electrode active material comprising the negative electrode active material particles (e.g., the ab-axis crystal faces of graphite) are arranged to have a predetermined slope relative to the surface of the negative electrode current collector, which may be different from the carbon-based negative electrode active material particles themselves being arranged to have a specific orientation within the negative electrode active layer.

In addition, "highly oriented carbon-based negative electrode active material" may mean that certain crystal faces (e.g., a-b axis crystal faces of graphite) representing the two-dimensional planar structure of the carbon-based negative electrode active material contained in the negative electrode active layer have a high frequency of having a predetermined slope relative to the negative electrode current collector surface. It may also mean, in some cases, that the crystal faces of the carbon-based negative electrode active material contained in the negative electrode active layer are arranged at a high angle (e.g., a near-vertical angle, greater than 45°; specifically greater than 60°) relative to the surface of the negative electrode current collector.

In addition, "high alignment of the carbon-based negative electrode active material" means that the "alignment (O.I)" referred to herein has a large value, which may mean that certain crystal faces (e.g., a-b axis crystal faces of graphite) representing the two-dimensional planar structure of the carbon-based negative electrode active material contained in the negative electrode active layer are arranged at a low angle (e.g., less than 45°) relative to the surface of the negative electrode current collector. Conversely, "low alignment of the carbon-based negative electrode active material" may mean that the "degree of alignment (O.I.)" has a small value, such that the crystal faces of the carbon-based negative electrode active material contained in the negative electrode active layer are arranged at a high angle (e.g., an angle close to vertical, greater than 45°; specifically greater than 60°) relative to the surface of the negative electrode current collector.

Hereinafter, the present invention will be described in more detail.

Winding-type electrode assembly for lithium secondary Battery

In an exemplary embodiment, the present invention provides

a winding-type electrode assembly including a positive electrode, a negative electrode, and a separator disposed therebetween, wherein
the negative electrode includes: a negative electrode current collector; and a first negative electrode active layer and a second negative electrode active layer comprising a carbon-based negative electrode active material and formed on both sides of the negative electrode current collector, respectively, wherein the first negative electrode active layer is spaced further from the winding center of the electrode assembly than the second negative electrode active layer, wherein
in the first negative electrode active layer, the alignment ($S_{ex60/0}$) of the carbon-based negative electrode active material represented by Equation 1 below is smaller than the alignment ($S_{in60/0}$) of the carbon-based negative electrode active material contained in the second negative electrode active layer:

[Equation 1]

$$S_{60/0} = \frac{I60_{B/A}}{I0_{B/A}}$$

[Equation 2]

$$I60_{B/A} = \frac{I60_B}{I60_A}$$

[Equation 3]

$$I0_{B/A} = \frac{I0_B}{I0_A}$$

In Equation 1 to Equation 3,

$S_{60/0}$ represents the value of the ratio of the peak intensity ($I60_{B/A}$) at an incident angle of 60° of the X-ray to the ratio of the peak intensity ($I0_{B/A}$) at an incident angle of 0° of the X-ray,
$I60_A$ represents the intensity of the highest peak present at $286 \pm 1.0$ eV, at an incidence angle of 60°,
$I60_B$ represents the intensity of the intensity of the highest peak present at $292.5 \pm 1.0$ eV at an incidence angle of 60°,
$I0_A$ represents the intensity of the highest peak at $286 \pm 1.0$ eV at an incidence angle of 0°,

$I0_B$ represents the intensity of the highest peak among the peaks present at $292.5 \pm 1.0$ eV at an incidence angle of 0°.

The winding-type electrode assembly according to the present invention may be formed by preparing a positive electrode, a negative electrode, and a separator, each having a sheet shape, disposing the separator between the positive electrode and the negative electrode, and then winding them.

In this case, the negative electrode includes a negative electrode active layer including a carbon-based negative electrode active material on both sides of the negative electrode current collector. The negative electrode active layer is a layer that embodies the electrical activity of the negative electrode. The negative electrode active layer includes a carbon-based negative electrode active material as the negative electrode active material to realize electrical activity through a reversible redox reaction during charging and discharging of the battery. Specifically, the carbon-based negative electrode active material refers to a material having carbon atoms as a main component, and such a carbon-based negative electrode active material may include graphite. The graphite may include one or more of natural graphite and synthetic graphite. For example, the carbon-based negative electrode active material may include natural graphite or synthetic graphite alone, or in some cases, a mixture of natural and synthetic graphite. In this case, the ratio of natural graphite to artificial graphite may be 5-40:60-95, or 10-30:70-90, based on weight. By including natural graphite and synthetic graphite in the mixing ratio as described above, the carbon-based negative electrode active material can strengthen the adhesion of the negative electrode current collector and the negative electrode active layer, while achieving a high orientation of the carbon-based negative electrode active material to the surface of the negative electrode current collector.

In addition, the carbon-based negative electrode active material is preferably a spherical graphite assembly formed by aggregation of a plurality of flake graphite. The flake graphite can be natural graphite, artificial graphite, mesophase calcined carbon (bulk mesophase) made from tar and pitch, graphitized cokes (raw coke, green coke, pitch coke, needle coke, petroleum coke, etc.), and the like, and in particular, it is preferred to be assembled using a plurality of highly crystalline natural graphite. In addition, one graphite assembly may be formed from 2 to 100 pieces of flake-shaped graphite, preferably 3 to 20 pieces.

Such carbon-based negative electrode active materials, specifically graphite, may have a spherical particle shape, wherein the sphericity of the graphite particles may be greater than or equal to 0.75, such as 0.75 to 1.0; 0.75 to 0.95; 0.8 to 0.95; or 0.90 to 0.99. Here, "sphericity" may mean the ratio of the shortest diameter (short diameter) to the longest diameter (long diameter) of any diameter passing through the center of the particle, wherein a sphericity of 1 means that the particle has a spherical shape. The sphericity may be determined by measuring the particle shape using a particle shape analyzer, or by measuring the shape of the particle using a scanning electron microscope (SEM), an energy dispersive spectrometer, or the like, and then analyzing the measured results.

The present invention has the advantage that by realizing the shape of the carbon-based negative electrode active material close to a spherical shape, a high electrical conductivity of the negative electrode active layer can be realized, thus improving the capacity of the battery, and the specific surface area per unit weight of the negative electrode active material can be increased, thus improving the adhesion between the negative electrode active layer and the current collector.

Further, the carbon-based negative electrode active material may have an average particle diameter ($D_{50}$) of 0.5 $\mu$m to 10 $\mu$m, and more specifically, may have an average particle diameter ($D_{50}$) of 2 $\mu$m to 7 $\mu$m; 0.5 $\mu$m to 5 $\mu$m; or 1 $\mu$m to 3 $\mu$m.

The average particle diameter of a near-spherical carbon-based negative electrode active material can be advantageous to have a smaller particle diameter to maximize the disorder in the swelling direction for each particle to prevent the particles from swelling due to the charging of lithium ions. However, if the particle diameter of the carbon-based negative electrode active material is less than 0.5 $\mu$m, a large amount of binder is required due to the increase in the number of particles per unit volume, and the sphericity and sphericalization yield may decrease. On the other hand, if the maximum particle diameter exceeds 10 $\mu$m, the expansion rate of the negative electrode active material increases significantly during charge and discharge of the secondary battery, which can significantly reduce the cycling characteristics due to the poor cohesion between the negative electrode active material particles and the cohesion between the negative electrode active material particles and the current collector as the charge and discharge are repeated.

The negative electrode active layers including such carbon-based negative electrode active materials are disposed on both sides of the negative electrode current collector, but the orientation and/or alignment of the carbon-based negative electrode active materials may be controlled according to their location. Specifically, referring to FIG. 1, the negative electrode 13 according to the present invention includes a first negative electrode active layer 13c and a second negative electrode active layer 13b on both sides of the negative electrode current collector 13a. Here, the first negative electrode active layer 13c is positioned to be spaced apart from the winding center of the electrode assembly than the second negative electrode active layer 13b relative to the negative electrode current collector 13a. Accordingly, the area ratio where the second negative electrode active layer 13b contacts the positive electrode active layer (e.g.,

the first positive electrode active layer 11ac) has a smaller area ratio compared to the area ratio where the first negative electrode active layer 13c contacts the positive electrode active layer (e.g., the second positive electrode active layer 11bb). In general, a first negative electrode active layer that is more spaced apart relative to the winding center of a wound electrode assembly may have a larger migration rate of lithium ions compared to a second negative electrode active layer that is more proximate to the winding center, and thus may have a relatively lower charging performance. However, the present invention can reduce the electrode resistance of the first negative electrode active layer 13c than that of the second negative electrode active layer 13b by orienting the ab-axis crystal face of the carbon-based negative electrode active material contained in the first negative electrode active layer 13c to have a predetermined angle with respect to the negative electrode current collector. By doing so, the present invention can further improve the charging performance of the first negative electrode active layer 13c.

Specifically, the first negative electrode active layer 13c may have the ab-axis crystal faces of the carbon-based negative electrode active material aligned substantially vertically such that the negative electrode active layer 13c has a slope of 60° to 120° with respect to the surface of the negative electrode current collector 13a. Here, "aligning the carbon-based negative electrode active material substantially perpendicular to the negative electrode current collector" may mean that the crystal faces of the carbon-based negative electrode active material including the spherical particles, specifically, the ab-axis crystal faces representing the plane direction of graphite having a two-dimensional structure among the crystal faces of graphite, are arranged at an slope substantially perpendicular to the surface of the negative electrode current collector 13a. In this case, the plane direction of the graphite (i.e., the ab-axis crystal face direction) may have an average slope of 60 to 120° with respect to the negative electrode current collector 13a, preferably 70 to 110°; or 80 to 100°. In comparison, the second negative electrode active layer 13b may be aligned such that the ab-axis crystal faces of the carbon-based negative electrode active material have a slope of less than 60° and/or greater than 120° with respect to the surface of the negative electrode current collector 13a.

In addition, the carbon-based negative electrode active material contained in the second negative electrode active layer 13b may be oriented such that the ab-axis crystal face has a predetermined angle with respect to the surface of the negative electrode current collector 13a, just like the carbon-based negative electrode active material contained in the first negative electrode active layer 13c. However, the angle of the ab-axis crystal face of the carbon-based negative electrode active material contained in the second negative electrode active layer 13b with respect to the negative electrode current collector may be lower than the angle of the ab-axis crystal face of the carbon-based negative electrode active material contained in the first negative electrode active layer 13c.

Furthermore, the alignment of the carbon-based negative electrode active material may be applied by any method conventionally applied in the art without being particularly limited. Preferably, however, the alignment of the carbon-based negative electrode active material can be achieved by applying a negative electrode slurry containing the carbon-based negative electrode active material to both sides of the negative electrode current collector during negative electrode manufacturing and then applying a magnetic field to the surface of each applied negative electrode active layer.

The alignment of the carbon-based negative electrode active material may be controlled by the strength of the applied magnetic field or the time of exposure. For example, when a magnetic field is applied to the surface of a negative electrode slurry containing the above carbon-based negative electrode active material for 1 to 10 seconds, the slope of the ab-axis crystal face of the carbon-based negative electrode active material of the negative electrode slurry subjected to the magnetic field for 10 seconds to the surface of the negative electrode current collector may be greater than that of the carbon-based negative electrode active material of the negative electrode slurry subjected to the magnetic field for 1 second. In the present invention, the magnetic field application to the negative electrode slurry may be performed at an intensity of 0.5 T to 2.0 T and a duration of 1 second to 60 seconds. More specifically, it may be performed at an intensity of 0.8 T to 1.5 T; or 0.8 T to 1.2 T for 1 s to 30 s; or 1 s to 20 s. Further, the magnet used to apply the magnetic field to the negative electrode slurry may have a length ratio of 105% to 200% relative to the width direction of the negative electrode slurry. Specifically, the magnet may have a length ratio of 110% to 180%; 110% to 160%; 110% to 140%; 110% to 130%; 130% to 150%; or 105% to 120% relative to the width direction of the negative electrode slurry.

The present invention can induce different orientations of the carbon-based negative electrode active material by position of the first negative electrode active layer 13c and the second negative electrode active layer 13b when applying a magnetic field by applying a different magnetic field strength and/or time.

As one example, when a magnetic field is applied to the negative electrode slurry surface including the carbon-based negative electrode active material with a strength of 0.5 to 2.0 T, a magnetic field of 2.0 T is applied to the negative electrode slurry surface corresponding to the first negative electrode active layer 13c and a magnetic field of 0.5 T is applied to the negative electrode slurry surface corresponding to the second negative electrode active layer 13b, so that a different degree of orientation of the first negative electrode active layer 13c and the second negative electrode active layer 13b can be realized.

The alignment of the carbon-based negative electrode active material (e.g., graphite) may be determined by molecular orientation and/or crystal structure analysis of the carbon-based negative electrode active material.

In one example, the alignment of the carbon-based negative electrode active material contained in the negative electrode active layer may be determined by near-end X-ray absorption fine structure (NEXAFS) spectroscopy. In this case, the first negative electrode active layer 13c may have the carbon-based negative electrode active material aligned close to perpendicular to the negative electrode current collector, such that the alignment ($S_{60/0}$) according to Equation 1 below is smaller than the alignment ($S_{60/0}$) of the carbon-based negative electrode active material contained in the second negative electrode active layer 13b:

[Equation 1]

$$S_{60/0} = \frac{I60_{B/A}}{I0_{B/A}}$$

(In Equation 1, S60/0 represents the value of the ratio of the ratio of peak intensity (I60B/A) when the X-ray is incident at an angle of 60° to the ratio of peak intensity (I0B/A) when the X-ray is incident at an angle of 0° in the analysis of near-end X-ray absorption fine structure (NEXAFS) spectroscopy).

Unlike X-ray photoelectron spectroscopy (XPS), which measures the bonding energy between the atoms comprising a compound, Near Edge X-ray Absorption Fine Structure (NEXAFS) spectroscopy can only reflect the local structure in the vicinity of carbon atoms containing excited valence electrons and the surface structure of the measured carbon-based negative electrode active material particles. Thus, by utilizing the spectra obtained by NEXAFS spectroscopic analysis of the negative electrode active layer, the present invention can measure the alignment of the carbon-based negative electrode active materials contained in the negative electrode active layer.

Specifically, when the carbon atom (C) of a carbon-based negative electrode active material is irradiated with X-rays, the occupied electrons (K-angle valence electrons) present in the valence level (1s orbital) of the carbon atom absorb the X-ray energy and are excited to various resonance molecular orbitals in the unoccupied state, and the NEXAFS spectroscopic analysis utilizes the observed absorption spectra. In the case of graphite, a carbon-based negative electrode active material, these resonance molecular orbitals are: i) the $\pi^*$ orbital, which is attributed to the antibonding orbitals of sp2 bonds, reflecting the crystallinity of graphite (e.g., basal or oriented), ii) the $\sigma^*$ orbital, which is attributed to the antibonding orbitals of the sp3 bonds that reflect disorder in the crystallinity (e.g., edges or disoriented), and iii) the Rydberg orbital, which is attributed to semi-conjugated orbitals such as C-H or CO bonds.

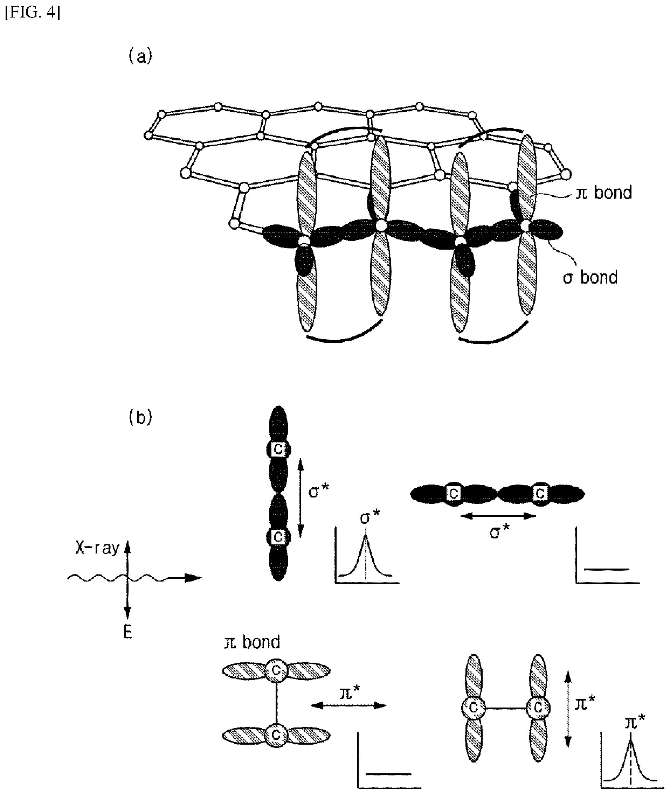

Carbon-based negative electrode active materials, such as graphite, have a crystal structure in which the carbon atoms are stacked in a hexagonal network structure (see (a) in FIG. 4) by sp2 bonds. Here, the two-dimensional plane of the hexagonal faces (the ab-axis crystal face) is the base plane, and the plane where the ends of the hexagonal network appear (the c-axis crystal plane) is the edge plane. On the edge plane of carbon-based negative electrode active materials, there is a possibility that -COOH, -C=O, etc. exist on the terminal carbon, so the sp3 bond ratio may be high. Therefore, the crystal face orientation and/or alignment of a carbon-based negative electrode active material can be analyzed by analyzing the state of the sp2 orbital of the carbon atoms on each crystal face of the carbon-based negative electrode active material.

The NEXAFS spectroscopy may be performed by irradiating the negative electrode active layer with X-rays having a fixed angle of incidence with respect to the negative electrode active layer. The spectroscopic analysis can be performed by total electron quantitation, which measures the current flowing through the negative electrode active layer to compensate for the photoelectrons emitted from the surface of the negative electrode active layer while injecting the energy of the irradiating X-ray from 280 eV to 320 eV.

In this case, since the radiated light is an X-ray that is linearly polarized by applying a magnetic field (E), the intensity of the observed absorption peak may vary depending on the incident direction of the X-ray. Specifically, referring to (a) of FIG. 4, graphite, a carbon-based negative electrode active material, has a hexagonal network structure through sp2 bonds (-C=C-) of carbon atoms, wherein the sp2 bonds include a $\sigma$ orbital located in a direction parallel to the sp2 bonds and a $\pi$ orbital located in a direction perpendicular to the sp2 bonds. Here, the $\sigma$ orbitals and $\pi$ orbitals have a symmetrical structure with $\sigma^*$ orbitals and $\pi^*$ orbitals being semi-bonding orbitals and having nodes at the nuclear positions of the carbon atom, respectively, so that the $\sigma^*$ orbitals and $\pi^*$ orbitals have the same directionality as the $\sigma$ orbitals and $\pi$ orbitals.

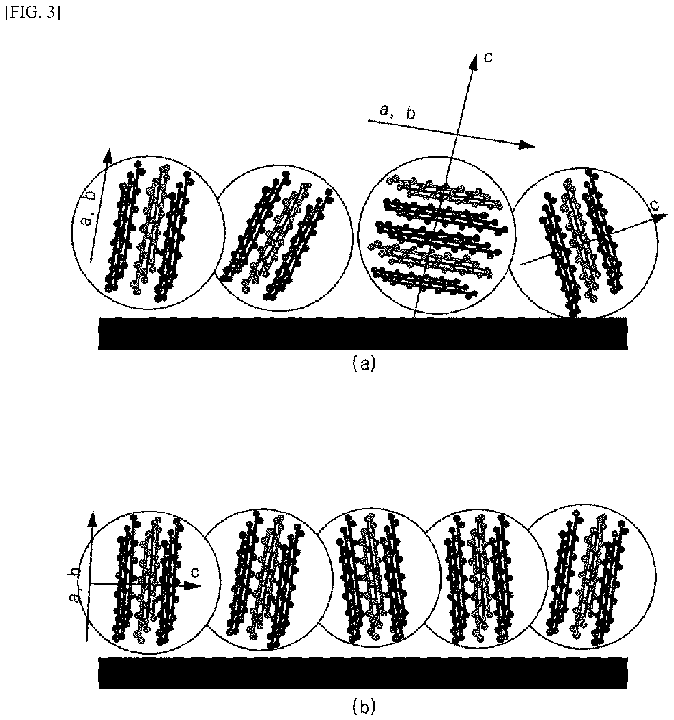

Thus, as shown in (b) of FIG. 4, if the incident direction of the X-ray is parallel to the sp2 bond, the intensity of the absorption peak excited by the $\pi^*$ level from the 1s level of the carbon becomes larger, and conversely, if it is orthogonal to the sp2 bond, the intensity of the absorption peak becomes smaller. On the other hand, if the incident direction of the X-ray is parallel to the sp2 bond, the intensity of the absorption peak excited by the $\sigma^*$ level from the 1s level of the carbon becomes smaller, and if it is orthogonal to the sp2 bond, the intensity of the absorption peak becomes larger. Due to this characteristic, if the graphite contained in the negative electrode active layer is highly oriented, as shown in (b) of FIG. 3, the semicoordinated molecular orbitals of the graphite located on the surface of the negative electrode active layer are uniformly aligned, so that when the incident angle of the X-ray on the negative electrode active layer is changed, the spectral shape of the emitted photoelectrons changes significantly due to enhancement, interference, etc. On the other hand, if the graphite contained in the negative electrode active layer has a low orientation, as shown in (a) of FIG. 3, the molecular orbitals of the semi-conjugated resonance of the graphite located on the surface of the negative electrode active layer are unevenly aligned, so the spectral shape changes little when the incident angle of the X-ray for the negative electrode active layer is changed.

Accordingly, in order to measure the degree of orientation of the carbon-based negative electrode active material contained in the negative electrode active layer, the present invention performs a NEXAFS spectroscopic analysis of the surface of the negative electrode active layer, wherein X-rays are incident on the negative electrode active layer at different incident angles (0° and 60°), and for each incident angle, the ratio of the absorption peak attributable to the transition from the 1s level to the $\pi^*$ level of carbon (peak A=287±0.2eV) intensity to the absorption peak (peak B=293±0.2eV) intensity attributable to the transition from the 1s level to the $\sigma^*$ level of carbon ($I_{B/A}$) is obtained, and then the ratio of the intensity ratios between the incident angles (60° and 0°) ($S_{60/0}$= I60$_{B/A}$/I0$_{B/A}$) is calculated, so that the orientation and/or alignment of the carbon-based negative electrode active material contained in the negative electrode active layer can be quantitatively measured.

In other words, the degree of orientation of the carbon-based negative electrode active material contained in the sliding portion is determined by i) calculating the ratio (I60$_{B/A}$) of the absorption peak (peak A=287±0.2 eV) intensity (I60$_A$) attributable to the transition from the 1s level to the $\pi^*$ level of carbon measured at an X-ray incident angle of 60° to the absorption peak (peak B=293±0.2eV) intensity (I60$_B$) attributable to the transition from the 1s level to the $\sigma^*$ level of carbon (I60$_B$) measured at an X-ray incident angle of 60°, as shown in Equation 2; ii) calculating the ratio (I0$_{B/A}$) of the intensity (10$_A$) of the absorption peak (peak A=287±0.2 eV) attributable to the transition from the 1s level to the $\pi^*$ level of carbon to the intensity (I0$_B$) of the absorption peak (peak B=293±0.2 eV) attributable to the transition from the 1s level to the $\sigma^*$ level of carbon measured at an X-ray incident angle of 0°, as shown in Equation 3; and iii) finding the ratio of these ($S_{60/0}$= I60$_{B/A}$/I0$_{B/A}$) as shown in Equation 1:

[Equation 2]

$$I60_{B/A} = \frac{I60_B}{I60_A}$$

[Equation 3]

$$I0_{B/A} = \frac{I0_B}{I0_A}$$

In Equation 1 to Equation 3,

$S_{60/0}$ represents the value of the ratio of the ratio of the peak intensity (I60$_{B/A}$) at an incident angle of 60° of the X-ray to the ratio of the peak intensity (I0$_{B/A}$) at an incident angle of 0° of the X-ray,
I60$_A$ represents the intensity of the highest peak present at 286±1.0 eV, at an incidence angle of 60°,
I60$_B$ represents the intensity of the intensity of the highest peak present at 292.5±1.0 eV at an incidence angle of 60°,
I0$_A$ represents the intensity of the highest peak at 286±1.0 eV at an incidence angle of 0°,
I0$_B$ represents the intensity of the highest peak among the peaks present at 292.5±1.0 eV at an incidence angle of 0°.

Here, the value according to Equation 1 ($S_{60/0}$) may mean that the closer to 1, the lower the orientation of the a-b axis crystal faces of the graphite, a carbon-based negative electrode active material, with respect to the negative electrode current collector and the higher the degree of alignment (O.I), and the closer to 0, the higher the orientation of the a-b axis crystal faces of the graphite with respect to the negative electrode current collector and the lower the degree of alignment (O.I).

The first negative electrode active layer 13c according to the present invention may satisfy a value ($S_{60/0}$) according to Equation 1 as 1.0 or less, more specifically as 0.9 or less; 0.8 or less; 0.7 or less; 0.5 or less; 0.05 to 0.7; 0.05 to 0.5; 0.05 to 0.4; 0.1 to 0.7; 0.3 to 0.7; or 0.5 to 0.8. Further, the second negative electrode active layer 13b may be satisfied with an average of the values ($S_{60/0}$) according to Formula 1 exceeding 0.5, more specifically 0.5 to 1.5; 0.5 to 1.2; 0.7 to 1.0; 0.8 to 1.0; or 0.7 to 1.1. Furthermore, the second negative electrode active layer 13b may have a ratio of 101% to 150% with respect to $S_{60/0}$ of the first negative electrode active layer 13c. Specifically, the second negative electrode active layer 13b may have a ratio of 101% to 130%; or 105% to 115% with respect to $S_{60/0}$ of the first negative electrode active layer 13c.

By controlling the respective alignment (S60/0) of the first negative electrode active layer 13c and the second negative electrode active layer 13b as described above, the present invention can reduce the electrode resistance generated by the first negative electrode active layer 13c of the negative electrode provided in the winding-type electrode assembly less than that generated by the second negative electrode active layer 13b. Furthermore, such a reduction in the electrical resistance of the first negative electrode active layer 13c may further improve the charge and discharge performance of the electrode assembly, and may further improve the life of the secondary battery because it may reduce the deviation in the rate at which each negative electrode active layer disposed on both sides of the negative electrode current collector degrades.

In another example, the alignment of the carbon-based negative electrode active material contained in the negative electrode active layer may be determined by X-ray diffraction (XRD) spectroscopic analysis. In this case, the first negative electrode active layer 13c may have the ab-axis crystal faces of the carbon-based negative electrode active material aligned close to perpendicular to the negative electrode current collector, such that the alignment ($O.I_{sliding}$) of the carbon-based negative electrode active material represented by Equation 4 below is smaller than the alignment ($O.I_{flat}$) of the carbon-based negative electrode active material contained in the flat portion:

$$[\text{Equation 4}]$$

$$O.I = I_{004}/I_{110}$$

In Equation 4,

$I_{004}$ represents the area of the peak representing the [0,0,4] crystal face in the X-ray diffraction spectroscopy (XRD) measurement of the negative active layer,
$I_{110}$ represents the area of the peak representing the [1,1,0] crystal face in an X-ray diffraction (XRD) measurement of the negative active layer.

The crystal face orientation of the carbon-based negative electrode active material can be determined by crystal face analysis of the carbon-based negative electrode active material, such as X-ray diffraction spectroscopy. The orientation index (O.I) of the carbon-based negative electrode active material represented by Equation 4 can be an indicator of the direction in which the crystal structure of the carbon-based negative electrode active material is aligned during X-ray diffraction measurements, specifically, the degree to which the a-b axis crystal planes representing the two-dimensional planar structure of the carbon-based negative electrode active material are aligned with respect to the negative electrode current collector surface. For example, if the negative electrode active layer includes graphite as a carbon-based negative electrode active material, an X-ray diffraction spectroscopy analysis of the negative electrode active layer shows peaks for graphite at $2\Theta=26.5\pm0.2°$, $42.4\pm0.2°$, $43.4\pm0.2°$, $44.6\pm0.2°$, $54.7\pm0.2°$, and $77.5\pm0.2°$. These represent the (0,0,2), (1,0,0), (1,0,1)R, (1,0,1)H, (0,0,4), and (1,1,0) crystal faces of the graphite contained in the negative electrode active layer. In general, in the case of graphite, graphene layers are placed on the a- and b-axis planes, and these graphene layers are stacked along the c-axis to form a hexagonal or rhombohedral crystal structure. The peak at $2\theta=43.4\pm0.2°$ can also be seen as an overlap of the peaks corresponding to the (1,0,1) R plane of carbon-based materials and the (1,1,1) plane of current collectors, such as Cu.

The present invention is capable of measuring the degree of alignment (O.I) of graphite through the ratio of the areas of the peak at $2\theta=77.5\pm0.2°$ representing the [1,1,0] plane and the peak at $2\theta=54.7\pm0.2°$ representing the [0,0,4] plane, specifically, the ratio of the areas obtained by integrating the intensities of the peaks. In addition, X-ray diffraction was measured using a CuK $\alpha$-ray as the target line, and to improve the peak intensity resolution, the target line was extracted with a monochromator device. In this case, the measurement conditions were $2\theta=10°$ to $90°$, scan speed (°/s) was 0.044 to 0.089, and step size was 0.026°/step.

In addition, the (0,0,4) plane at $2\theta=54.7\pm0.2°$ represents the thickness direction characteristics (c-axis direction characteristics) of the laminated structure with the two-dimensional planar structure of the graphite layer, and the (1,1,0) plane at $2\theta=77.5\pm0.2°$ represents the planar characteristics (a-b-axis direction characteristics) of the laminated graphite layer. Therefore, the smaller the peak in the (0,0,4) plane, which represents the thickness-direction characteristics of the graphite layer plane, and the larger the peak in the (1,1,0) plane, which represents the planar characteristics of the graphite layer, the more the graphite plane is aligned at a high angle to the negative electrode current collector surface. In other words, the degree of alignment (O.I) may mean that the angle or slope of the graphite layer surface with respect to the negative electrode current collector surface is close to 90° when the value is close to 0, and the slope with respect to the negative electrode current collector surface is close to 0° or 180° when the value is larger.

In this respect, the first negative electrode active layer 13c according to the present invention can have a relatively low degree of alignment (O.I) compared to the carbon-based negative electrode active material contained in the second negative electrode active layer 13b because the ab-axis crystal faces of the carbon-based negative electrode active material are aligned close to perpendicular to the negative electrode current collector.

Specifically, the alignment ($O.I_{1st}$) of the carbon-based negative electrode active material contained in the first negative electrode active layer 13c may be from 0.1 to 2.0, more specifically from 0.1 to 1.5; 0.1 to 1.0; 0.2 to 1.5; 0.5 to 1.5; 0.8 to 1.5; 1.0 to 2.0; 0.3 to 1.2; 0.6 to 1.2; 0.15 to 0.8; 0.15 to 0.6; 0.15 to 0.5; 0.2 to 0.5; 0.2 to 0.4; 0.25 to 0.45; 0.3 to 0.5; 0.3 to 0.8; 0.4 to 0.7; or 0.35 to 0.6.

By controlling the alignment ($O.I_{1st}$) of the carbon-based negative electrode active material contained in the first negative electrode active layer 13c to the above-described range, the present invention is able to reduce the electrode resistance while improving the mobility of lithium ions at the negative electrode end during charging and discharging of the battery. This reduction in electrode resistance can further improve the charge and discharge performance of the electrode assembly, and can further improve the lifetime of the secondary battery by reducing the rate at which each negative electrode active layer disposed on both sides of the collector degrades.

Furthermore, the carbon-based negative electrode active material contained in the second negative electrode active layer 13b may be oriented together with the carbon-based negative electrode active material contained in the first negative electrode active layer 13c so that the ab-axis crystal face has a predetermined angle or slope with respect to the negative electrode current collector surface. Accordingly, the carbon-based negative electrode active material contained in the second negative electrode active layer 13b may have an alignment ($O.I_{2nd}$) according to Equation 4 that satisfies a predetermined range. Specifically, the alignment ($O.I_{2nd}$) of the second negative electrode active layer may have a ratio of 101% to 150% based on the alignment ($O.I_{1st}$) of the first negative electrode active layer, more specifically, a ratio of 101% to 140%; 101% to 130%; 101% to 120%; 101% to 110%; 105% to 120%; 105% to 130%; 105% to 140%; 110% to 130%; 110% to 120%; 115% to 130%; or 120% to 140%.

By adjusting the alignment ($O.I_{1st}$ and $O.I_{2nd}$) of the carbon-based negative electrode active materials contained in the first negative electrode active layer 13c and the second negative electrode active layer 13b, respectively, to satisfy the above ranges, the present invention can increase the lithium mobility of the entire negative electrode active layers 13b and 13c while more effectively reducing the electrical resistance of the first negative electrode active layer 13c, thereby improving the energy density of the negative electrode. Furthermore, when the ratio of the alignment ($O.I_{1st}$ and $O.I_{2nd}$) of the carbon-based negative electrode active materials contained in the first negative electrode active layer 13c and the second negative electrode active layer 13b, respectively, satisfies the above range and is significantly increased, the deviation of the alignments ($O.I_{1st}$ and $O.I_{2nd}$) of the carbon-based negative electrode active materials becomes larger, thereby promoting position-specific degradation of the negative electrode active layer and shortening the life of the negative electrode.

As another example, when the alignment of the carbon-based negative electrode active material contained in the negative electrode active layer is determined by X-ray diffraction (XRD) spectroscopic analysis, the first negative electrode active layer 13c may satisfy a degree of divergence (DD) value defined by Equation 5 below to a certain extent, and the value may be greater than the DD value of the second negative electrode active layer 13b:

[Equation 5]

$$\text{DD (Degree of Divergence)} = (I_a/I_{total}) \times 100$$

In Equation 5,

$I_a$ represents the sum of peak intensities at nonplanar angles in an XRD measurements using CuKα rays,
$I_{total}$ represents the sum of peak intensities at all angles in an XRD measurement using CuKα rays.

Here, the nonplanar angle refers to $2\theta = 42.4 \pm 0.2°$, $43.4 \pm 0.2°$, $44.6 \pm 0.2°$, $77.5 \pm 0.2°$, which are the (1,0,0) plane, (1,0,1)R plane, (1,0,1)H plane, and (1,1,0) plane when measured by X-ray diffraction (XRD) using CuKα rays.

The DD value according to Equation 5 indicates the ratio of crystal faces of graphite having a two-dimensional structure among all faces of carbon-based negative electrode active material in XRD spectroscopic analysis, wherein the two-dimensional structure refers to a layered structure of graphite that is directly related to electrical properties. In other words, Equation 5 indicates the degree to which the two-dimensional structure of graphite that enhances electrical properties is aligned with respect to the negative electrode current collector 13a, wherein a larger value indicates that the graphite is vertically oriented with respect to the negative electrode current collector 13a.

The first negative electrode active layer of the present invention can have a DD value according to Equation 5 that is greater than the DD value of the second negative electrode active layer, thereby having a uniform charging performance across the electrode assembly. In one example, the first negative electrode active layer may have a DD value of 20 to 60, and the second negative electrode active layer may have a DD value that is less than 1% to 95% based on the DD value of the first negative electrode active layer. More specifically, the first negative electrode active layer may have a DD value of 25 to 40; or 40 to 55, in which case the second negative electrode active layer may have a DD value of 5 to 20; or 20 to 45 (a ratio of 60 to 85% based on the DD value of the first negative electrode active layer).

Further, the winding-type electrode assembly includes a negative electrode wound with a rectangular positive electrode and a separator. Accordingly, the first negative electrode active layer 13c contained within the negative electrode may have different positions within the winding-type electrode assembly, and the alignment of the carbon-based negative electrode active material contained therein may vary depending on the position of the first negative electrode active layer 13c. Specifically, as shown in FIG. 1, the winding-type electrode assembly has a structure that includes an oblong negative electrode 13 with a first negative electrode active layer 13c and a second negative electrode active layer 13b provided on both sides of the negative electrode current collector 13a in a rolled up form relative to a winding center.

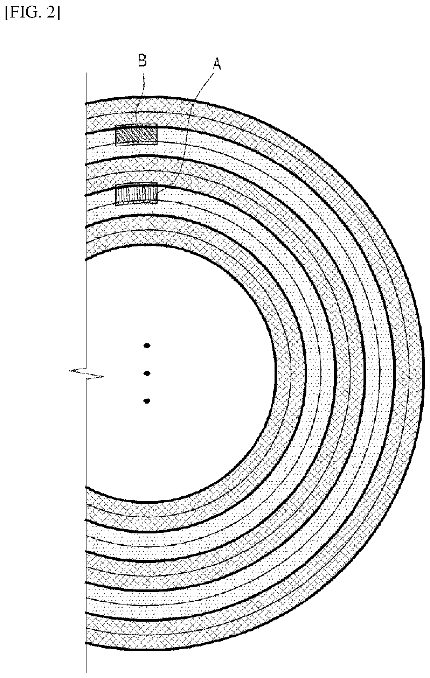

In these winding-type electrode assemblies, when the secondary battery is charged and discharged for a long period of time, lithium ions are continuously intercalated and deintercalated to the negative electrode active material, causing the negative electrode active material to shrink and expand repeatedly. At this time, the intercalation and deintercalation of lithium ions degrade the alignment of the ab-axis crystal face of the carbon-based negative electrode active material contained in the negative electrode active layer. Furthermore, the shrinkage and expansion of the negative electrode active material exerts stress on the negative electrode current collector, inducing wrinkling, loosening, buckling, etc. of the negative electrode current collector, which further promotes the degradation of the ab-axis crystal face of the carbon-based negative electrode active material. In particular, as shown in FIG. 2, a part of the negative electrode current collector that is located on the outer side (B) than the inner side (A) relative to the winding center of the wound electrode assembly is strongly induced to wrinkle, loosen, buckle, etc. Therefore, even if the negative electrode active layer is a single layer, the degree of impairment of the alignment of the ab-axis crystal faces of the carbon-based negative electrode active material may be greatly affected depending on its position in the electrode assembly after winding.

However, by controlling the alignment ($S_{60/0}$, $O.I_{1st}$ and/or DD) of the carbon-based negative electrode active material by position of the first negative electrode active layer 13c, which is located outwardly than the second negative electrode active layer 13b relative to the winding center, the present invention can minimize the orientation damage and/or loss of the carbon-based negative electrode active material even after a prolonged charge and discharge of the secondary battery.

Specifically, the present invention may control the orientation of the carbon-based negative electrode active material contained in the first negative electrode active layer from inward to outward relative to the winding center of the electrode assembly, such that the alignment at the outermost part of the wound negative electrode has the ratio described above relative to the alignment at the winding center. In this case, as shown in FIG. 2, the carbon-based negative electrode active material included in the outermost part of the wound negative electrode has a smaller slope of the crystal face relative to the negative electrode current collector compared to the carbon-based negative electrode active material included in the winding center. In this case, the stresses generated in each region during the volume expansion due to the intercalation of lithium ions are in different directions, and they contradict each other. Accordingly, this reduces the total stress on the negative electrode current collector and the amount of stress generated at the outermost part. Thus, this has the advantage of minimizing the orientation damage and/or loss of carbon-based negative electrode active material that occurs during prolonged charge and discharge of secondary batteries.

To this end, the present invention can control the alignment ($S_{60/0}$, $O.I_{1st}$ and/or DD) of the first negative electrode active layer such that the slope of the ab-axis crystal faces of the carbon-based negative electrode active material contained in the first negative electrode active layer with respect to the negative electrode current collector decreases in the above-described ratios from the inside to the outside relative to the winding center of the electrode assembly. In one example, the first negative electrode active layer 13c may have a ratio of alignment ($S_{ex60/0}$) at an outermost part of the electrode assembly to alignment ($S_{in60/0}$) at a winding center of the electrode assembly of 101% to 150%, more specifically 101% to 140%; 101% to 130%; 101% to 120%; 101% to 110%; 105% to 120%; 105% to 130%; 105% to 140%; 110% to 130%; 110% to 120%; 115% to 130%; or 120% to 140%.

As another example, the first negative electrode active layer 13c may have an alignment ($O.I_{ex1st}$) at an outermost part of the electrode assembly based on an alignment ($O.I_{in1st}$) at a winding center of the electrode assembly with a ratio of 101% to 150%, and more particularly may have a ratio of 101% to 140%; 101% to 130%; 101% to 120%; 101% to 110%; 105% to 120%; 105% to 130%; 105% to 140%; 110% to 130%; 110% to 120%; 115% to 130%; or 120% to 140%.

In yet another example, the first negative electrode active layer 13c may have a $DD_{ex1st}$ value at the outermost part of the electrode assembly based on a $DD_{in1st}$ value at the center of winding of the electrode assembly with a ratio 50% to 99%, more specifically from 95% to 75%; or from 80% to 95%.

The alignment ratio of the carbon-based negative electrode active material contained in the winding center and the outermost part of the first negative electrode active layer 13c can be implemented in a manner conventionally applicable in the art. In the case of the present invention, the above alignment ratio can be realized by ① controlling the orientation conditions when orienting the crystal faces of the carbon-based negative electrode active material contained in the first negative electrode active layer 13c; or ② controlling the winding conditions when winding the manufactured negative electrode together with the positive electrode and the separator. Here, the winding conditions can refer to the winding speed of the electrode, the winding thickness, etc. When winding an electrode assembly, the winding speed or the thickness of the wound electrode assembly can affect the stress applied to the negative electrode current collector contained in the negative electrode. Stressed negative electrode current collector can lower the alignment of the carbon-based negative electrode active layer on the surface aligned negative electrode active material. Thus, by controlling the stress applied to the negative electrode current collector during winding of the electrode assembly, the alignment ratio of the carbon-based negative electrode active material at the winding center and the outermost part of the first negative electrode active layer 13c can be implemented.

In one example, the present invention can apply a negative electrode slurry including a carbon-based negative electrode active material to both sides of the negative electrode current collector, and then apply a magnetic field of a different intensity to each of the negative electrode slurries corresponding to the first negative electrode active layer and the second negative electrode active layer. At this time, the magnetic field applied to the negative electrode slurry corresponding to the first negative electrode active layer is not constant in intensity, but is strengthened or weakened in a predetermined ratio, so that deviations in the alignment of the carbon-based negative electrode active materials in the negative electrode slurry by region (e.g., the winding center region and the outermost part region of the negative electrode active layer) can be implemented.

As another example, the present invention can manufacture a negative electrode by applying a negative electrode slurry including a carbon-based negative electrode active material to both sides of a negative electrode current collector, and then applying a magnetic field of different intensities to each negative electrode slurry corresponding to a first negative electrode active layer and a second negative electrode active layer, and drying and rolling it. Then, the manufactured negative electrode is wound with a positive electrode and a separator to manufacture a winding-type electrode assembly, but by controlling that the winding speed becomes increasingly faster after the start of winding, different degrees of orientation of the first negative electrode active layer 13c and the second negative electrode active layer 13b can be implemented.

Furthermore, the winding-type electrode assembly according to the present invention may be adjusted so that the loading amount of the negative electrode satisfies a predetermined range. For example, the negative electrode provided in the winding-type electrode assembly may include a first negative electrode active layer and a second negative electrode active layer, each having a loading amount of 250 mg/25 cm$^2$ to 500 mg/25 cm$^2$. More specifically, the first negative electrode active layer and the second negative electrode active layer included in the negative electrode may each have a loading amount of 250 mg/25 cm$^2$ to 450 mg/25 cm$^2$; 250 mg/25 cm$^2$ to 400 mg/25 cm$^2$; 250 mg/25 cm$^2$ to 350 mg/25 cm$^2$; 250 mg/25 cm$^2$ to 300 mg/25 cm$^2$; 270 mg/25 cm$^2$ to 380 mg/25 cm$^2$; 300 mg/25 cm$^2$ to 500 mg/25 cm$^2$; 380 mg/25 cm$^2$ to 450 mg/25 cm$^2$; or 400 mg/25 cm$^2$ to 500 mg/25 cm$^2$, respectively.

Furthermore, the winding-type electrode assembly of the present invention may have a diameter of 30 mm or more. Specifically, the diameter of the electrode assembly may have a lower limit of 35 mm or more; 37.5 mm or more; 40 mm or more; 42.5 mm or more; or 45 mm or more, and an upper limit of 100 mm or less; 90 mm or less; 80 mm or less; 70 mm or less; 60 mm or less; or 50 mm or less.

In one example, the winding-type electrode assembly according to the present invention may have a diameter of 35 mm to 75 mm, and more specifically may have a diameter of 35 mm to 70 mm; 35 mm to 65 mm; 35 mm to 60 mm; 38 mm to 55 mm; 40 mm to 50 mm; 42 mm to 48 mm.

The present invention has the advantage that by controlling the diameter of the winding-type electrode assembly and the loading amount of the negative electrode provided in the winding-type electrode assembly to the above-described range, the energy density and output of the electrode assembly can be significantly increased, and at the same time, the volume change of the negative electrode during charging and discharging of the secondary battery can be effectively suppressed, so that the problems caused thereby can be easily improved.

Further, the first negative electrode active layer can control the ratio ($I_{004}/I_{002}$) of the intensity of the peak representing the (0,0,4) crystal face to the intensity of the peak representing the (0,0,2) crystal face in the X-ray diffraction spectroscopy (XRD) measurement to a certain range. Specifically, the first negative electrode active layer can control the ratio ($I_{004}/I_{002}$) to be greater than or equal to 0.04, more specifically, it can be 0.04 to 0.09; 0.04 to 0.07. By controlling the intensity ratio ($I_{004}/I_{002}$) of the peaks to the above range, the present invention can suppress the increase of the direct current internal resistance, so that the charging and discharging performance at the winding center of the electrode assembly and the charging and discharging performance at the outermost part can be realized uniformly, thereby preventing unbalanced degeneration of the electrode assembly.

Meanwhile, the negative electrode active layer according to the present invention may optionally further include, in addition to the negative electrode active material, a conductor, a binder, other additives, etc. as required.

The conductor may include one or more types of carbon black, acetylene black, ketjen black, carbon nanotubes, carbon fiber, and the like, but is not limited thereto.

As one example, the negative electrode active layer may contain carbon nanotubes or carbon fibers as a conductor alone or in combination.

In such a case, the content of the conductor may be from 0.1 to 10 parts by weight, more specifically, 0.1 to 8 parts by weight, 0.1 to 5 parts by weight, 0.1 to 3 parts by weight, or 0.5 to 2 parts by weight, relative to the total 100 parts by weight of the negative electrode active layer. By controlling the content of the conductor to the above range, the present invention can prevent the resistance of the negative electrode from increasing due to a low content of the conductor, thereby reducing the charging capacity, and the content of the negative electrode active material from decreasing due to an excessive amount of the conductor, thereby reducing the charging capacity, or the rapid charging characteristics from decreasing due to an increase in the loading amount of the negative electrode active layer.

In addition, the binder can be appropriately applied as a component that assists in the bonding of the active material and the conductor and the bonding to the current collector to the extent that it does not degrade the electrical properties of the electrode, and may include one or more among vinylidene fluoride-hexafluoropropylene copolymer (PVDF-co-HFP), polyvinylidenefluoride (PVdF), and polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber, and fluorinated rubber.

The content of the binder may be from 0.1 to 10 parts by weight, more particularly from 0.1 to 8 parts by weight, from 0.1 to 5 parts by weight, from 0.1 to 3 parts by weight, or from 2 to 6 parts by weight, based on a total of 100 parts by weight of the negative electrode active layer. By controlling the content of the binder contained in the negative electrode active layer to the above range, the present invention can prevent the adhesive strength of the active layer from being reduced due to a low content of binder or the electrical properties of the electrode from being reduced due to an excess of binder.

Moreover, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, those that are surface treated with carbon, nickel, titanium, silver, and the like can also be used. In addition, the average thickness of the negative electrode current collector may be appropriately applied from 1 to 500 $\mu$m in consideration of the conductivity and total thickness of the negative electrode to be prepared.

Furthermore, when a creep rate is measured under a tensile force condition of 22±2°C and 300MPa, the negative electrode current collector may satisfy a time-dependent ratio of the amount of change in length (C2) of the negative electrode current collector at a time 2 seconds after applying the tensile force and the amount of change in length (C60) of the negative electrode current collector at a time 60 seconds after applying the tensile force to be 20 to 50 $\mu$m/sec.

Here, "creep rate" is the degree of deformation of the negative electrode current collector over time, which represents the rate of change of the length of the negative electrode current collector over time by applying a certain force to a metal sheet at a certain temperature. By controlling the creep rate of the negative electrode current collector to satisfy the above range, the present invention can reduce the stress on the negative electrode current collector generated at the outer edge of the winding-type electrode assembly during charging and discharging of the battery, thereby improving the wrinkling, loosening, buckling, etc. of the negative electrode.

Further, the winding-type electrode assembly according to the present invention includes a positive electrode having a positive electrode active layer including a positive electrode active material on the positive electrode current collector. In this case, the positive electrode active layer may optionally further include, in addition to the positive electrode active material, a conductor, a binder, other additives or the like as required.

The positive electrode active material is a material capable of electrochemically reacting on the positive electrode current collector and may include one or more of the lithium metal oxides represented by Formula 1 and Formula 2 below that are capable of reversibly intercalating and deintercalating lithium ions:

$$[\text{Formula 1}] \qquad \text{Li}_x[\text{Ni}_y\text{Co}_z\text{Mn}_w\text{M}^1_v]\text{O}_2$$

$$[\text{Formula 2}] \qquad \text{LiM}^2_p\text{Mn}_q\text{P}_r\text{O}_4$$

In Equation 1 and Equation 2,

$\text{M}^1$ is one or more of the following elements: W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are 1.0≤x≤1.30, 0.5≤y<1, 0<z≤0.3, 0<w≤0.3, and 0≤v≤0.1, respectively, and y+z+w+v=1,

$\text{M}^2$ is Ni, Co, or Fe,

p is $0.05 \leq p \leq 1.0$,

q is either 1-p or 2-p, and

r is 0 or 1.

Lithium metal oxides represented by Formula 1 and Formula 2, respectively, are materials containing a high content of nickel (Ni) and manganese (Mn), and have the advantage of being able to stably supply high capacity and/or high voltage electricity when used as a positive electrode active material.

In this case, the lithium metal oxide represented by the above Formula 1 may include $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$ and the like, which may be used alone or in combination. Further, the lithium metal oxide represented by Formula 2 above may include $LiNi_{0.7}Mn_{1.3}O_4$; $LiNi_{0.5}Mn_{1.5}O_4$; $LiNi_{0.3}Mn_{1.7}O_4$, $LiFePO_4$, $LiFe_{0.8}Mn_{0.2}PO_4$, $LiFe_{0.5}Mn_{0.5}PO_4$, and the like, which may be used alone or in combination.

Furthermore, the positive electrode active material may be included in the amount of at least 85 parts by weight based on the weight of the positive electrode active layer, and more specifically may be included in the amount of at least 90 parts by weight, at least 93 parts by weight, or at least 95 parts by weight.

Furthermore, the positive electrode active layer may further include a conductor, a binder, other additives, and the like along with the positive electrode active material.

In this case, the conductor is used to improve the electrical performance of the positive electrode and may be any material conventionally used in the art, but more particularly may include one or more selected from the group consisting of natural graphite, synthetic graphite, carbon black, acetylene black, denka black, ketjen black, super-P, channel black, furnace black, lamp black, summer black, graphene, and carbon nanotubes.

Furthermore, the conductor may be included in the amount of 0.1 to 5 parts by weight based on the weight of each positive electrode active layer, more particularly may be included in the amount of 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the said binder serves to cause the positive electrode active material, positive electrode additive, and conductor to be bonded together, and may be used without being particularly limited as long as it has this function. Specifically, the binder may include one or more resins selected from the group consisting of polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidenefluoride.

Additionally, the binder may be included in the amount of 1 to 10 parts by weight based on the weight of each positive electrode active layer, more particularly 2 to 8 parts by weight; or 1 to 5 parts by weight.

The total thickness of the positive electrode active layer is not particularly limited, but may be from 50 $\mu$m to 300 $\mu$m, and more particularly from 100 $\mu$m to 200 $\mu$m; 80 $\mu$m to 150 $\mu$m; 120 $\mu$m to 170 $\mu$m; 150 $\mu$m to 300 $\mu$m; 200 $\mu$m to 300 $\mu$m; or 150 $\mu$m to 190 $\mu$m.

Furthermore, as a positive electrode current collector, the positive electrode can use those having a high conductivity without causing chemical changes in the battery. For example, stainless steel, aluminum, nickel, titanium, calcined carbon, and the like can be used, and in the case of aluminum or stainless steel, a surface treatment of carbon, nickel, titanium, silver, and the like can be used. Furthermore, the average thickness of the current collector may be suitably applied from 3 to 500 $\mu$m, considering the conductivity and total thickness of the positive electrode being manufactured.

Meanwhile, the separator interposed between the positive electrode and the negative electrode of each unit cell is an insulating thin film having high ionic permeability and mechanical strength, which is conventionally used in the art, but is not particularly limited, and in particular, those including one or more of the following polymers may be used: chemically resistant and hydrophobic polypropylene; polyethylene; polyethylene-propylene copolymer. The separator may take the form of a porous polymeric substrate, such as a sheet or nonwoven fabric including the above-described polymers, and in some cases may take the form of a composite separator in which organic or inorganic particles are coated by an organic binder on the porous polymeric substrate. Furthermore, the separator may have an average pore diameter from 0.01 to 10 $\mu$m, and an average thickness from 5 to 300 $\mu$m.

By having the above-described configuration, the winding-type electrode assembly according to the present invention can not only realize uniform charging performance of the electrode assembly, but also improve the performance deterioration caused by wrinkling, loosening, buckling, etc. of the negative electrode current collector during a long charge and discharge. Thus, the secondary battery including the same has the advantage of excellent life characteristics and excellent charge and discharge performance for a long time.

Lithium secondary battery

Furthermore, in an exemplary embodiment, the present invention provides
a lithium secondary battery including the winding-type electrode assembly of the present invention as described above.

The lithium secondary battery according to the present invention includes a winding-type electrode assembly having a sequentially arranged positive electrode, a separator, and a negative electrode, each of which is rectangular in shape. By including the winding-type electrode assembly according to the invention described above, the uniform charging performance of the electrode assembly can be realized, and the performance deterioration caused by wrinkling, loosening, buckling, etc. of the negative electrode current collector during prolonged charging and discharging can be improved. Accordingly, the secondary battery including such an electrode assembly has the advantage of excellent life characteristics and excellent charge and discharge performance for a long time.

Since the winding-type electrode assembly has the same configuration as the winding-type electrode assembly of the present invention described above, a detailed description will be omitted.

Further, the lithium secondary battery includes, in conjunction with the electrode assembly, an electrolyte composition having a lithium salt dissolved in a non-aqueous organic solvent.

The electrolyte composition may include, but is not limited to, an organic liquid electrolyte, an inorganic liquid electrolyte, a solid polymer electrolyte, a gel-like polymer electrolyte, a solid inorganic electrolyte, a molten inorganic electrolyte, and the like that can be used in the manufacture of a lithium secondary battery.

Specifically, the electrolyte may include an organic solvent and a lithium salt.

As the organic solvent, any type can be used without any particular limitation as long as it can serve as a medium in which the ions involved in the electrochemical reaction of the battery can move.

For example, the organic solvent may be an ester-based solvent such as methyl acetate, ethyl acetate, $\gamma$-butyrolactone, $\varepsilon$-caprolactone, etc; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvents such as ethyl alcohol, isopropyl alcohol, etc.; nitrile groups such as R-CN (where R is a straight, branched, or cyclic hydrocarbon group from C2 to C20, and may include a double bond aromatic ring or ether bond); amide groups such as dimethylformamide; dioxolane groups such as 1,3-dioxolane; or sulfolane groups. Among these, a carbonate-based solvent is preferred, and a mixture of a cyclic carbonate (e.g., ethylene carbonate or propylene carbonate, etc.) having a high ionic conductivity and high dielectric constant that can increase the charge and discharge performance of the battery and a linear carbonate-based compound (e.g., ethyl methyl carbonate, dimethyl carbonate, or diethyl carbonate, etc.) having a low viscosity is more preferred. In this case, a mixture of cyclic carbonate and chained carbonate in a volume ratio of about 1:1 to 9 may result in a superior performance of the electrolyte.

Furthermore, the lithium salts may be used without particular limitation as long as they are compounds capable of providing lithium ions for use in lithium secondary batteries. Specifically, the lithium salts may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$.

Furthermore, the concentration of the lithium salt can be used in the range of 0.1 M to 2.0 M. When the concentration of the lithium salt is included in the above range, the electrolyte has a suitable conductivity and viscosity, so that it can exhibit excellent electrolyte performance, and the lithium ions can effectively move around

In addition to the above electrolyte components, the electrolyte may also contain, for example, haloalkylene carbonate-based compounds such as difluoroethylene carbonate, for example, for the purpose of improving the life characteristics of the battery, inhibiting the reduction of the battery capacity, improving the discharge capacity of the battery, etc; or may contain one or more additives such as pyridine, triethylphosphite, triethanolamine, cyclic ether, ethylenediamine, N-glyme, hexynitriamide, nitrobenzene derivative, sulfur, quinone imine dye, N-substituted oxazolidinone, N,N-substituted imidazolidine, ethylene glycol dialkyl ether, ammonium salt, pyrrole, 2-methoxyethanol, or aluminum trichloride. The additives may be included in the amount of 0.1 wt% to 5 wt% with respect to the total weight of the electrolyte.

Meanwhile, the lithium secondary battery according to the present invention is not particularly limited, but may be a cylindrical secondary battery or a prismatic secondary battery to which a winding-type electrode assembly may be applied. As one example, the lithium secondary battery according to the present invention may be a prismatic secondary battery.

Furthermore, since the lithium secondary battery exhibits excellent discharge capacity, output characteristics, and capacity retention rate stably, it is useful in portable devices such as mobile phones, laptops, digital cameras, and electric vehicles such as hybrid electric vehicles (HEVs).

[Mode for carrying out the invention]

Hereinafter, the present invention will be described in more detail by way of examples and experimental examples.

However, the following examples and experimental examples are only illustrative of the present invention, and the contents of the present invention are not limited to the following examples and experimental examples.

Preparation Examples 1 to 8. Preparation of a negative electrode for a winding-type electrode assembly.

Natural graphite (sphericity: 0.9±0.2) was prepared as a negative electrode active material, carbon black as a conductor, and carboxymethylcellulose (CMC) and styrene butadiene rubber (SBR) as binders. The negative electrode slurry was formed by mixing 95 parts by weight of natural graphite, 1 part by weight of carbon black, 1.5 parts by weight of carboxymethyl cellulose (CMC), and 2.5 parts by weight of styrene butadiene rubber (SBR) with water to reach 50% solids content, and then co-casting the negative electrode slurry on both sides of a copper thin plate (thickness: 10 $\mu$m) that was being transferred roll-to-roll. Then, magnets were placed on the upper and lower parts of the copper thin plate, respectively. At this time, the magnets were adjusted to have a length ratio of 110-120% based on the length in the width direction of the negative electrode slurry. The magnets were then used to apply a magnetic field to each of the moving negative electrode slurries (moving speed: 1-3 m/min) to induce a vertical orientation of the natural graphite in the negative electrode slurry. At this time, the magnetic field was applied under the following conditions.

[Table 1]

| | Negative electrode slurry for forming first negative electrode active layer | | Magnetic field application condition on negative electrode slurry for forming second negative electrode active layer |
| --- | --- | --- | --- |
| | Intensity | Time | Intensity |
| Condition 1 | - | - | - |
| Condition 2 | 1.0T | - | 1.0T |
| Condition 3 | 0.5T | - | 2.0T |
| Condition 4 | 2.0T | - | 0.5T |
| Condition 5 | Decreasing application (2.0T->1.0T) | 1±0.2 min cycle | 0.5T |
| Condition 6 | Increasing application (1.0T->2.0T) | 1±0.2 min cycle | 0.5T |
| Condition 7 | Decreasing application (2.0T->0.5T) | 1±0.2 min cycle | 0.5T |
| Condition 8 | 0.2T | - | 0.1T |

The negative electrode was then prepared by drying the copper thin plate on which the negative electrode slurry was applied in a vacuum oven at 130 °C, and then rolling and slitting it to a density of 1.63±0.2 g/cc. To confirm the alignment of the carbon-based negative electrode active materials contained in the first negative electrode active layer and the second negative electrode active layer of each prepared negative electrode, i) Near edge X-ray absorption fine structure (NEXAFS) and X-ray diffraction (XRD) were performed on the first negative electrode active layer and the second negative electrode active layer, respectively, to measure the spectra. The conditions for each spectroscopic analysis were as follows:

① Near edge X-ray absorption fine structure (NEXAFS):

- Acceleration voltage: 1.0 GeV to 1.5 GeV
- Accumulation current: 80 to 350 mA
- Incidence angle: 60° or 0

② X-ray diffraction (XRD):

- Target: Cu (Kα-ray) graphite monochromator
- Slit: Divergence slit = 1 degree, receiving slit = 0.1 mm, scattering slit = 1 degree

The alignment ($S_{60/0}$, O.I and/or DD) of natural graphite (i.e., carbon-based negative electrode active material) was calculated from each spectrum obtained using Equations 1 to 5 below. Furthermore, ii) X-ray diffraction (XRD) spectroscopic analysis was further performed on the region to be the winding center and the region to be the outermost part during winding in the first negative electrode active layer to calculate the alignment ratio (O.I$_{ex}$/O.I$_{in}$ * 100) of the carbon-based negative electrode active material contained in the region to be the outermost part and the region to be the winding center, respectively. Finally, iii) the ratio ($I_{004}/I_{002}$) of the intensity of the peak in the (0,0,4) plane to the intensity of the peak in the (0,0,2) plane was calculated from the spectrum obtained during the X-ray diffraction (XRD) spectroscopic analysis of the first negative electrode active layer. The results are shown in Table 2 and Table 3 below:

[Equation 1]

$$S_{60/0} = \frac{I60_{B/A}}{I0_{B/A}}$$

[Equation 2]

$$I60_{B/A} = \frac{I60_B}{I60_A}$$

[Equation 3]

$$I0_{B/A} = \frac{I0_B}{I0_A}$$

In Equation 1 to Equation 3,

$S_{60/0}$ represents the value of the ratio of the ratio of the peak intensity ($I60_{B/A}$) at an incident angle of 60° of the X-ray to the ratio of the peak intensity ($I0_{B/A}$) at an incident angle of 0° of the X-ray,
$I60_A$ represents the intensity of the highest peak present at $286 \pm 1.0$ eV, at an incidence angle of 60°,
$I60_B$ represents the intensity of the highest intensity of the peak present at $292.5 \pm 1.0$ eV at an incidence angle of 60°,
$I0_A$ represents the intensity of the highest peak at $286 \pm 1.0$ eV at an incidence angle of 0°,
$I0_B$ represents the intensity of the highest peak among the peaks present at $292.5 \pm 1.0$ eV at an incidence angle of 0°.

[Equation 4]

$$O.I = I_{004}/I_{110}$$

In Equation 4,

$I_{004}$ represents the area of the peak representing the [0,0,4] crystal face in the X-ray diffraction spectroscopy (XRD) measurement of the negative active layer,

$I_{110}$ represents the area of the peak representing the [1,1,0] crystal face in an X-ray diffraction (XRD) measurement of the negative active layer.
face in an X-ray diffraction (XRD) measurement of the negative active layer.

[Equation 5]

$$DD\ (Degree\ of\ Divergence) = (I_a/I_{total}) \times 100$$

In Equation 5,
$I_a$ represents the sum of peak intensities at nonplanar angles in an XRD measurements using CuK$\alpha$ rays,
$I_{total}$ represents the sum of peak intensities at all angles in an XRD measurement using CuK$\alpha$ rays.

[Table 2]

| | Magnetic field application condition | First negative electrode active layer | | | | |
|---|---|---|---|---|---|---|
| | | $S_{60/0}$ | O.I | DD | O.I$_{ex}$/O.I$_{in}$* 100 | $I_{004}/I_{002}$ |
| Preparation Example 1 | Condition 1 | 2.51 | 8.43 | 5 | 100±0.5% | 0.06 |
| Preparation Example 2 | Condition 2 | 0.94 | 1.25 | 22 | 100±0.5% | 0.05 |
| Preparation Example 3 | Condition 3 | 0.82 | 0.91 | 24 | 100±0.5% | 0.03 |
| Preparation Example 4 | Condition 4 | 0.62 | 0.49 | 34 | 102±0.5% | 0.05 |
| Preparation Example 5 | Condition 5 | 0.59 | 0.47 | 36 | 115±5% | 0.04 |
| Preparation Example 6 | Condition 6 | 0.64 | 0.51 | 35 | 80±5% | 0.04 |
| Preparation Example 7 | Condition 7 | 0.63 | 0.52 | 35 | 200±5% | 0.05 |
| Preparation Example 8 | Condition 8 | 1.41 | 2.12 | 29 | 100±0.5% | 0.03 |

[Table 3]

| | Magnetic field application condition | Second negative electrode active layer | | |
|---|---|---|---|---|
| | | $S_{60/0}$ | O.I | DD |
| Preparation Example 1 | Condition 1 | 2.50 | 8.41 | 6 |
| Preparation Example 2 | Condition 2 | 0.92 | 1.21 | 24 |
| Preparation Example 3 | Condition 3 | 0.73 | 0.68 | 36 |
| Preparation Example 4 | Condition 4 | 0.93 | 1.25 | 19 |
| Preparation Example 5 | Condition 5 | 0.92 | 1.24 | 20 |
| Preparation Example 6 | Condition 6 | 0.92 | 1.24 | 20 |
| Preparation Example 7 | Condition 7 | 0.94 | 1.26 | 18 |
| Preparation Example 8 | Condition 8 | 1.68 | 4.12 | 14 |

Examples 1 to 5 and Comparative Examples 1 to 3. Preparation of a winding-type electrode assembly
LiNi$_{0.7}$Co$_{0.1}$Mn$_{0.1}$Al$_{0.1}$O$_2$ with a particle size of 5 $\mu$m was prepared as the positive electrode active material, and mixed with polyvinylidene fluoride as a carbon-based conductor and binder in a weight ratio of 94:3:3 in N-methyl pyrrolidone (NMP) to form a slurry, cast on an aluminum thin plate, dried in a 120°C vacuum oven, and rolled to prepare the positive electrode.
A winding-type electrode assembly was prepared by winding an 18 $\mu$m polypropylene separator between the positive electrode obtained above and the negative electrode prepared in each of Preparation Examples 1 to 8. The type of negative electrode applied to each electrode assembly is shown in Table 4 below.

[Table 4]

| | Type of negative electrode applied |
|---|---|
| Comparative Example 1 | negative electrode prepared in Preparation Example 1 |

(continued)

|  | Type of negative electrode applied |
|---|---|
| Comparative Example 2 | negative electrode prepared in Preparation Example 2 |
| Comparative Example 3 | negative electrode prepared in Preparation Example 3 |
| Example 1 | negative electrode prepared in Preparation Example 4 |
| Example 2 | negative electrode prepared in Preparation Example 5 |
| Example 3 | negative electrode prepared in Preparation Example 6 |
| Example 4 | negative electrode prepared in Preparation Example 7 |
| Example 5 | negative electrode prepared in Preparation Example 8 |

Experimental Example 1.

To evaluate the performance of the winding-type electrode assembly according to the present invention after prolonged charge and discharge, the following experiments were performed.

Specifically, each of the winding-type electrode assemblies produced in the Examples and Comparative Examples was inserted into a cylindrical battery can and a non-aqueous electrolyte was injected to produce a secondary battery. Then, each cylindrical secondary battery produced while maintained at 45°C was charged and discharged 200 times in CC/CV mode, and the charge capacity retention rate was calculated by comparing the initial charge capacity and the capacity at 200 charges to determine the degradation of the electrode assembly.

In addition, each secondary battery performed with 200 charge/discharge cycles was disassembled and the shape of the negative electrode of the winding-type electrode assembly was visually evaluated. The negative electrode was marked with a "X" if there was no change in the negative electrode shape, and a "o" if the negative electrode was wrinkled and/or buckled, or showed signs of loosening. The results are shown in Table 5 below.

[Table 5]

|  | Capacity retention rate at 200 charge/discharge cycles | Negative electrode shape change |
|---|---|---|
| Comparative Example 1 | 71.1% | ○ |
| Comparative Example 2 | 85.2% | ○ |
| Comparative Example 3 | 88.7% | ○ |
| Example 1 | 93.5% | X |
| Example 2 | 94.8% | X |
| Example 3 | 90.2% | ○ |
| Example 4 | 88.8% | ○ |
| Example 5 | 86.1% | ○ |

As shown in Table 5 above, it can be seen that the winding-type electrode assembly according to the present invention has a high capacity retention rate and suppressed shape change of the negative electrode during prolonged charge and discharge. This indicates that the charging performance of the winding center and the outermost part of the winding-type electrode assembly is uniform during prolonged charging and discharging of the battery, so that the degeneration is suppressed and the stress on the expansion stress of the negative electrode is reduced.

From these results, it can be seen that the winding-type electrode assembly according to the present invention can not only realize uniform charging performance of the electrode assembly by controlling the orientation of the carbon-based negative electrode active material contained in the negative electrode active layer according to the degree of spacing of the negative electrode active layers arranged on both sides of the negative electrode current collector relative to the winding center of the electrode assembly, but also improve the performance deterioration caused by wrinkling, loosening, buckling, etc. of the negative electrode current collector during prolonged charge and discharge.

Although the above has been described with reference to a preferred exemplary embodiment of the present invention, it will be understood by those skilled in the art or having ordinary knowledge of the art that various modifications and changes can be made to the present invention without departing from the ideas and technical scope of the present invention described in the following claims.

Accordingly, the technical scope of the present invention is not limited to what is described in the detailed description of the specification, but should be defined by the patent claims.

**Claims**

1. A winding-type electrode assembly comprising a positive electrode, a negative electrode, and a separator disposed therebetween,

the negative electrode comprises: a negative electrode current collector; and a first negative electrode active layer and a second negative electrode active layer comprising a carbon-based negative electrode active material and formed on both sides of the negative electrode current collector, respectively, wherein the first negative electrode active layer is spaced further from the winding center of the electrode assembly than the second negative electrode active layer, wherein
in the first negative electrode active layer, the alignment ($S_{ex60/0}$) of the carbon-based negative electrode active material represented by Equation 1 below is smaller than the alignment ($S_{in60/0}$) of the carbon-based negative electrode active material contained in the second negative electrode active layer:

[Equation 1]

$$S_{60/0} = \frac{I60_{B/A}}{I0_{B/A}}$$

[Equation 2]

$$I60_{B/A} = \frac{I60_B}{I60_A}$$

[Equation 3]

$$I0_{B/A} = \frac{I0_B}{I0_A}$$

In Equation 1 to Equation 3,
$S_{60/0}$ represents the value of the ratio of the ratio of the peak intensity ($I60_{B/A}$) at an incident angle of 60° of the X-ray to the ratio of the peak intensity ($I0_{B/A}$) at an incident angle of 0° of the X-ray,
$I60_A$ represents the intensity of the highest peak present at $286\pm1.0$ eV, at an incidence angle of 60°,
$I60_B$ represents the intensity of the highest peak present at $292.5\pm1.0$ eV at an incidence angle of 60°,
$I0_A$ represents the intensity of the highest peak at $286\pm1.0$ eV at an incidence angle of 0°,
$I0_B$ represents the intensity of the highest peak among the peaks present at $292.5\pm1.0$ eV at an incidence angle of 0°.

2. The winding-type electrode assembly of claim 1, wherein

the first negative electrode active layer has an alignment ($O.I_{1st}$) according to Formula 4 below that is smaller than the alignment ($O.I_{2nd}$) of the second negative electrode active layer:

[Equation 4]

$$O.I = I_{004}/I_{110}$$

In Equation 4,

$I_{004}$ represents the area of the peak representing the [0,0,4] crystal face in the X-ray diffraction spectroscopy (XRD) measurement of the negative active layer,

$I_{110}$ represents the area of the peak representing the [1,1,0] crystal face in an X-ray diffraction (XRD) measurement of the negative active layer.

3. The winding-type electrode assembly of claim 2, wherein

the alignment ($O.I_{1st}$) of the first negative electrode active layer is between 0.1 and 2.0, and

the alignment ($O.I_{2nd}$) of the second negative electrode active layer has a ratio of 101% to 150% based on the alignment ($O.I_{1st}$) of the first negative electrode active layer.

4. The winding-type electrode assembly of claim 2, wherein
the first negative electrode active layer has an alignment ($O.I_{1st}$) at the outermost part of the electrode assembly that has a ratio of 101% to 150% based on the alignment ($O.I_{1st}$) at the winding center of the electrode assembly.

5. The winding-type electrode assembly of claim 1, wherein
the first negative electrode active layer has a ratio ($I_{004}/I_{002}$) of the intensity of the peak representing the (0,0,4) crystal face to the intensity of the peak representing the (0,0,2) crystal face of 0.04 or more when measured by XRD using $CuK\alpha$ rays.

6. The winding-type electrode assembly of claim 1, wherein
a carbon-based negative electrode active material includes one or more of the following: natural graphite and synthetic graphite.

7. The winding-type electrode assembly of claim 1, wherein
a carbon-based negative electrode active material has a sphericity greater than or equal to 0.75.

8. The winding-type electrode assembly of claim 1, wherein
the first negative electrode active layer and the second negative electrode active layer each have a loading amount of 250 mg/25 cm$^2$ to 500 mg/25 cm$^2$.

9. The winding-type electrode assembly of claim 1, wherein

a positive electrode includes a positive electrode active layer provided on both sides of the positive electrode current collector and including at least one positive electrode active material selected from the lithium metal oxides represented by Formula 1 and Formula 2 below:

[Formula 1] $\quad\quad Li_x[Ni_yCo_zMn_wM^1_v]O_2$

[Formula 2] $\quad\quad LiM^2_pMn_{1-p}O_4$

In Equation 1 and Equation 2,

$M^1$ is one or more of the following elements: W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and $y+z+w+v=1$,

$M^2$ is Ni, Co, or Fe, and

p is $0.05 \leq p \leq 1.0$.

10. The winding-type electrode assembly of claim 9, wherein
the positive electrode active material includes one or more of the following: $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, $LiNi_{0.3}Mn_{1.7}O_4$, $LiFePO_4$, $LiFe_{0.8}Mn_{0.2}PO_4$, and $LiFe_{0.5}Mn_{0.5}PO_4$.

**11.** A lithium secondary battery comprising a winding-type electrode assembly according to claim 1.

[FIG. 1]

[FIG. 2]

[FIG. 3]

(a)

(b)

[FIG. 4]

(a)

π bond

σ bond

(b)

X-ray

E

σ*

σ*

σ*

σ*

π bond

π*

π*

π*

[FIG. 5]

<div align="center">

**INTERNATIONAL SEARCH REPORT**

</div>

| International application No. |
|---|
| **PCT/KR2023/013877** |

| | |
|---|---|
| **A. CLASSIFICATION OF SUBJECT MATTER** | |

**H01M 10/0587**(2010.01)i; **H01M 4/133**(2010.01)i; **H01M 10/052**(2010.01)i; **H01M 4/525**(2010.01)i; **H01M 4/505**(2010.01)i; **H01M 4/587**(2010.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/0587(2010.01); C01B 31/04(2006.01); H01M 10/04(2006.01); H01M 10/052(2010.01); H01M 10/0525(2010.01); H01M 10/0567(2010.01); H01M 10/058(2010.01); H01M 4/133(2010.01); H01M 4/134(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(electrode assembly), 음극 집전체(cathode current collector), 음극 활성층(cathode active layer), 정렬도(degree of alignment), 근단 X선 흡수 미세 구조(near edge x-ray absorption fine structure)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0060777 A (SAMSUNG SDI CO., LTD.) 07 June 2018 (2018-06-07)<br>See paragraphs [0006]-[0060], claims 1 and 10 and figure 2. | 1-11 |
| Y | JP 2013-097973 A (TOYOTA MOTOR CORP.) 20 May 2013 (2013-05-20)<br>See paragraph [0008] and claim 1. | 1-11 |
| Y | KR 10-2021-0039599 A (LG CHEM, LTD.) 12 April 2021 (2021-04-12)<br>See paragraphs [0039]-[0041] and claim 1. | 6 |
| Y | JP 2005-050807 A (KANSAI COKE & CHEM CO., LTD.) 24 February 2005 (2005-02-24)<br>See paragraph [0019] and claim 1. | 7 |
| Y | KR 10-2022-0100825 A (SAMSUNG SDI CO., LTD.) 18 July 2022 (2022-07-18)<br>See paragraphs [0086]-[0087] and figure 3. | 9-10 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 December 2023** | **22 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013877**

| Patent document cited in search report | | | Publication date (day/month/year) | Patent family member(s) | | | Publication date (day/month/year) |
|---|---|---|---|---|---|---|---|
| KR | 10-2018-0060777 | A | 07 June 2018 | CN | 110024203 | A | 16 July 2019 |
| | | | | CN | 110024203 | B | 26 August 2022 |
| | | | | EP | 3550659 | A1 | 09 October 2019 |
| | | | | KR | 10-2255126 | B1 | 21 May 2021 |
| | | | | US | 11469410 | B2 | 11 October 2022 |
| | | | | US | 2019-0355972 | A1 | 21 November 2019 |
| | | | | US | 2023-0006189 | A1 | 05 January 2023 |
| | | | | WO | 2018-101696 | A1 | 07 June 2018 |
| JP | 2013-097973 | A | 20 May 2013 | CN | 103907225 | A | 02 July 2014 |
| | | | | CN | 103907225 | B | 10 February 2016 |
| | | | | EP | 2775555 | A1 | 10 September 2014 |
| | | | | EP | 2775555 | B1 | 26 October 2016 |
| | | | | JP | 5915083 | B2 | 11 May 2016 |
| | | | | US | 2014-0239963 | A1 | 28 August 2014 |
| | | | | WO | 2013-065223 | A1 | 10 May 2013 |
| KR | 10-2021-0039599 | A | 12 April 2021 | | None | | |
| JP | 2005-050807 | A | 24 February 2005 | JP | 4499498 | B2 | 07 July 2010 |
| KR | 10-2022-0100825 | A | 18 July 2022 | CN | 110416551 | A | 05 November 2019 |
| | | | | CN | 110416551 | B | 28 April 2023 |
| | | | | CN | 116154182 | A | 23 May 2023 |
| | | | | EP | 3561914 | A1 | 30 October 2019 |
| | | | | KR | 10-2019-0125114 | A | 06 November 2019 |
| | | | | KR | 10-2417773 | B1 | 05 July 2022 |
| | | | | US | 11152607 | B2 | 19 October 2021 |
| | | | | US | 2019-0334161 | A1 | 31 October 2019 |
| | | | | US | 2022-0029153 | A1 | 27 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220116882

- KR 1020230104698